# EUROPÄISCHE PATENTANMELDUNG

(11) **EP 3 575 912 A1**
(43) Veröffentlichungstag der Anmeldung: **04.12.2019**
(21) Anmeldenummer: 19174618.9
(22) Anmeldetag: 15.05.2019
(51) Int. Cl.: G05D 1/02

(54) **MÄHROBOTER**

(30) Priorität: 30.05.2018 DE 102018113015
(71) Anmelder: Stark, Armin, 73349 Wiesensteig (DE)
(72) Erfinder: Stark, Armin, 73349 Wiesensteig (DE)
(74) Vertreter: Ruckh, Rainer Gerhard

(57) **Zusammenfassung**

Die Erfindung betrifft einen Mähroboter (1) mit einer Bearbeitungseinrichtung (2) zur Durchführung von zumindest einem Arbeitsvorgang in einem Arbeitsbereich (3) und mit einer Sensoreinrichtung (4) zur Erfassung einer Umgebung des Mähroboters (1). Zur Bestimmung zumindest der Position des Mähroboters (1) in dem Arbeitsbereich (3) und zur Steuerung der Bearbeitungseinrichtung (2) ist eine Steuer- und/oder Regelungseinrichtung (5) vorgesehen. Durch die Steuer- und/oder Regelungseinrichtung (5) mit der Sensoreinrichtung (4) ist der Arbeitsbereich (3) in der Art einer 3-D-Darstellung mit einer Mehrzahl an Polygonen (7) erfasst und aufgeteilt.

## Beschreibung

Die Erfindung betrifft einen Mähroboter gemäß dem Oberbegriff des Anspruchs 1.

Solche Mähroboter werden beispielsweise zum Mähen von Grasflächen mit und ohne Hindernissen eingesetzt, wobei deren Bewegungsbahnen zum Einen von einer Steuerungseinrichtung des Mähroboters vorgegeben sein können und zum Anderen durch Leiteinrichtungen im Untergrund der jeweils zu bearbeitenden Fläche, beispielsweise durch im Boden verlegte Kontaktschleifen, ganz oder zumindest teilweise definiert werden können.

Die DE 10 2016 211 842 A1 beschreibt einen derartigen Mähroboter als Spezialform einer autonomen, mobilen Arbeitsmaschine. Dieser bewegt sich innerhalb eines vorzugebenden Arbeitsbereiches selbsttätig, ohne diesen zu verlassen. In einem Gehäuse der mobilen Arbeitsmaschine ist zumindest eine Sensoreinrichtung zur Erfassung der Umgebung der Arbeitsmaschine angeordnet, sowie eine Steuer- und/oder Regelungseinrichtung zur Bestimmung zumindest der Position der Arbeitsmaschine in dem Arbeitsbereich und zur Steuerung einer Bearbeitungseinrichtung, wie etwa eines Mähwerkes.

Die bekannten Mähroboter lassen Wünsche in Bezug auf ihre Einsetzbarkeit in verschiedensten Arbeitsbereichen offen. Insbesondere lassen deren Steuer- und Regelungseinrichtungen Wünsche in Bezug auf die Exaktheit der Positionsbestimmung offen.

Der Erfindung liegt die Aufgabe zugrunde, einen Mähroboter zu schaffen, dessen Sensoreinrichtung und Steuer- und/oder Regelungseinrichtung in Bezug auf dessen Zuverlässigkeit, Genauigkeit und der Erfassbarkeit aller Gelände- und Arbeitsbereichs-Eigenschaften verbessert ist.

Zur Lösung dieser Aufgabe sind die Merkmale der unabhängigen Ansprüche vorgesehen. Vorteilhafte Ausführungsformen und zweckmäßige Weiterbildungen sind in den abhängigen Ansprüchen beschrieben.

Um ein zuverlässiges Abfahren des Arbeitsbereiches des Mähroboters zu gewährleisten, ist vorgesehen, dass durch die Steuer- und/oder Regelungseinrichtung mit der Sensoreinrichtung zusammen der Arbeitsbereich in der Art einer 3-D-Darstellung oder 3-D-Karte unter Aufteilung der 3-D-Darstellung in eine Mehrzahl an Polygonen erfasst wird. Die 3-D-Darstellung kann beliebig fein in ihrer Auflösung sein, so dass eine beliebig hohe Zahl an Polygone verwendet wird um eine dreidimensionale Darstellung des von dem Mähroboter zu überfahrenden Arbeitsbereiches zu erreichen. Durch diese konstruktive Maßnahme ist es ermöglicht, dass dem Mähroboter eine Navigationsunterlage gegeben ist, die es ermöglicht, dass zu jeder Zeit und an jedem Ort des Arbeitsbereiches des Mähroboters wesentlich mehr und exaktere Informationen über deren Umgebung zur Verfügung gestellt sind, als dies im Stand der Technik bisher bekannt ist. Dadurch ist der Arbeitserfolg des Mähroboters verbessert, insbesondere, da jede Flächeneinheit des Arbeitsbereiches nicht, wie dies im Stand der Technik der Fall ist, oft mehrfach überfahren wird oder ungleich oft überfahren wird wie eine andere, auch zu dem Arbeitsbereich gehörende Flächeneinheit. Der Mähroboter ist dadurch auch in der Lage, seine aktuelle Position in dem Arbeitsbereich exakt zu bestimmen, wobei ein Verfahren der simultanen Lokalisierung und Kartenerstellung (SLAM) angewandt werden kann. Idealerweise ist der Mähroboter in der Lage, jeden Punkt der 3-D-Darstellung genau einmal anzufahren.

In einem besonders bevorzugten Ausführungsbeispiel des Mähroboters sind die Polygone in der Art von räumlich, also nicht nur in einer einzigen Ebene liegend, angeordneten Dreiecke, Vierecke, Fünfecke oder sonstige geeignete Vielecke ausgebildet. Die 3-D-Darstellung kann hierbei nach Bedarf aus einer Mischung der genannten Vielecke gebildet sein, so etwa in Bereichen des Arbeitsbereiches, in denen sich die geometrischen Eigenschaften des Geländes rasch und in engem Abstand zueinander ändern, aus sehr kleinen Dreiecken gebildet sein, während die 3-D-Darstellung in Bereichen, in denen der Arbeitsbereich sich nicht oder unwesentlich ändert, nur in größere Vielecke, z.B. in Quadrate mit großer Kantenlänge unterteilt ist.

Grundsätzlich sind durch die 3-D-Darstellung Hindernisse und Steigungen in dem Arbeitsbereich abgebildet. Zusätzlich können in einem weiteren, bevorzugten Ausführungsbeispiel des Mähroboters weitere örtliche Charakteristiken des Arbeitsbereichs, wie Geländegrenzen, Geländeneigungen, Bodenwellen, bauliche Einrichtungen oder Art und Höhe des jeweiligen Bewuchses oder auch die geomagnetische Ausrichtung an einer betreffenden Stelle in der 3-D-Darstellung abgespeichert sein. Bei der Berechnung des Bewegungspfades des Mähroboters in dessen Arbeitsbereich können diese Informationen von der Steuer- und/oder Regelungseinrichtung herangezogen und berücksichtigt werden.

Es ist ferner vorteilhaft, wenn jedem Polygon oder jedem Knotenpunkt zwischen den Polygonen von der Steuer- und/oder Regelungseinrichtung zusätzlich temporäre und sich ändernde örtliche Charakteristiken des Arbeitsbereichs, wie etwa aktuelle Temperaturen, die lokale Oberflächenfeuchte oder die lokalen Belichtungsverhältnisse zugeordnet werden. Dadurch ist ein Echtzeit-Bild der Umgebung des Mähroboters verfügbar bzw. wird dieses Echtzeitbild der Umgebung ständig neu erstellt und zur Planung des Bewegungsablaufs oder auch der Bearbeitungszeit, die der Mähroboter an einem bestimmten Flächensegment (Polygon) der 3-D-Darstellung für die Durchführung des Arbeitsvorganges vorsieht, herangezogen. So können etwa aktuelle Witterungseinflüsse oder sich ändernder Bewuchs in dem Arbeitsbereich bei dem Mähroboter berücksichtig werden und die Bearbeitungszeit entsprechend angepasst werden. Zu den temporären und sich ändernden, örtlichen Charakteristiken zählen auch dynamische Hindernisse im Sinne von allmählich entstehenden Hindernissen für den Mähroboter. Aus den in der 3-D-Darstellung und um die zusätzlichen, örtlichen Charakteristiken erweiterten Informationen kann die Steuerungs- und/oder Regelungseinrichtung eine Bahnplanung für den Arbeitsablauf des Mähroboters erstellen.

In einem weiteren vorteilhaften Ausführungsbeispiel kann zu der Steuer- und/oder Regelungseinrichtung ein Kommunikationsmodul zugeordnet sein, mit Hilfe dessen eine Kommunikationsverbindung zwischen der Steuer- und/oder Regelungseinrichtung und einem Nutzer (Bediener, Einrichter etc.) in der Art einer Mensch-Maschine-Schnittstelle hergestellt ist. Damit ist beispielsweise ermöglicht, dass der Mähroboter vor dem jeweiligen Einsatz von einem Einrichter oder Bediener in einem teaching-Vorgang an Punkte im Arbeitsbereich, die von Interesse (point of interest) oder auch nicht von Interesse sind, angefahren werden und die Informationen in der 3-D-Darstellung abgespeichert werden können. Auf diese Weise können der Steuer- und/oder Regelungseinrichtung Grenzen des Arbeitsbereichs eingegeben werden. Die Punkte von Interesse werden zusammengefasst und als Gerüst für die 3-D-Darstellung herangezogen. Die Kommunikationsverbindung kann in der Art einer direkten drahtlosen Verbindung (bluetooth) oder einer lokalen drahtlosen Netzwerkverbindung oder einer Internetverbindung (cloud) gebildet sein. Es kann auch eine manuelle Eingabeeinrichtung an des Mähroboters genutzt werden, um mit dieser zu kommunizieren.

Die Sensoreinrichtung umfasst zweckmäßigerweise eine Kamera oder eine Infrarotkamera, einen spektrometrischen Sensor oder Ultraschalldistanzsensor, einen Radarsensor, ein Lasersystem, wie Lidar, einen Beschleunigungs- oder Drehlagensensor, einen Sensor zum Empfang satellitengestützter Navigationssysteme (GPS) oder einen geomagnetischen oder gravimetrischen Sensor. Um kleinste Unebenheiten im Arbeitsbereich des Mähroboters wahrnehmen zu können, eignen sich Sensoren, die Bewegungsinformationen abbilden, wie Beschleunigungssensoren oder Drehratensensoren. Mit solchen Sensoren lassen sich Schatten beim Abtasten des Arbeitsbereichs, wie sie bei der Verwendung von Strahlen emittierenden Sensoren auftreten können, vermeiden.

Mit Hilfe von Ultraschallsensoren können beim Bewegen des Mähroboters Hindernisse erkannt und aus dem aktiven Arbeitsbereich ausgeklammert werden. Zudem lassen sich mit Ultraschallsensoren dynamische Hindernisse gut erfassen. Hingegen sind Ultraschallsensoren weniger geeignet, um Neigungen oder Steigungen in dem Arbeitsbereich erkennen zu können oder Grenzen des Arbeitsbereichs exakt erfassen zu können.

Die genannten Sensoren können zur Präzisierung der Punkte von Interesse (points of interest) in der 3-D-Darstellung und der Definition der Maße der Polygone herangezogen werden und ergänzen sich insgesamt in ihrer Wirkungsweise und ihrem Auflösevermögen in Bezug auf verschiedene örtliche oder temporäre Charakteristika. Insgesamt sind die genannten Sensoren wichtig um eine fortlaufende Selbstlokalisierung des Mähroboters in dem Arbeitsbereich zu ermöglichen.

Das dauerhafte Speichern der 3-D-Darstellung, sowie gegebenenfalls aktualisierter Arbeitskopien der 3-D-Darstellung des Arbeitsbereichs zur Verwendung in der Steuer- und/oder Regelungseinrichtung, ermöglicht ein digitaler Speicher in der Art eines RAMs und/oder ROMs. Der Speicher kann auch von einer CPU, die die Berechnung der jeweiligen Position des Mähroboters und die Anweisungen für einen Fahrantrieb und die Bearbeitungseinrichtung des Mähroboters berechnet, genutzt werden.

In dem digitalen Speicher sind auch alle für die Durchführung eines jeweiligen Arbeitsvorganges relevanten örtlichen und temporär sich ändernden Charakteristika, sowie statische oder dynamisch sich ändernde Hindernisse abgespeichert. Die Informationen der 3-D-Darstellung können, anstatt von der Steuer- und/oder Regelungseinrichtung, auch extern verarbeitet werden.

Die Erfindung wird im Folgenden anhand der Zeichnungen erläutert. Es zeigen:
- Fig. 1: eine Blockschaltbild-Darstellung eines Mähroboters,
- Fig. 2: ein Blockschaltbild, welches schematisch den Aufbau und die Wechselwirkung der Sensoreinrichtung und der Steuer- und/oder Regelungseinrichtung bei dem in Fig. 1 schematisch gezeigten Mähroboter verdeutlicht; und
- Fig. 3: eine erfindungsgemäße 3-D-Darstellung des Arbeitsbereiches eines Mähroboters bestehend aus einer Mehrzahl an Polygonen.

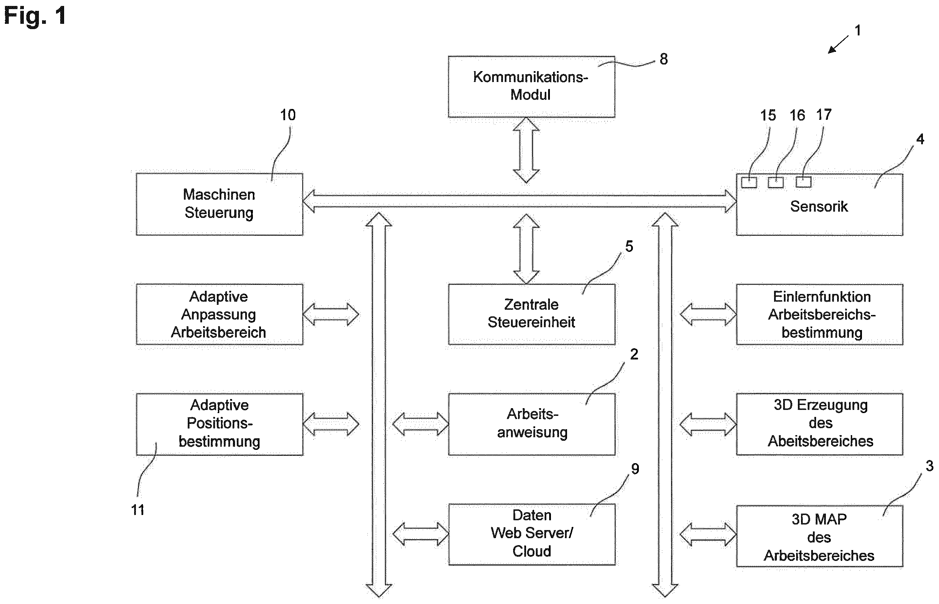

In Fig. 1 ist in einer schematischen Blockschaltbild-Darstellung ein Mähroboter 1 gezeigt. Der Mähroboter 1 kann mit seiner Bearbeitungseinrichtung 2 ein oder mehrere Arbeitsvorgänge oder Aufgaben, wie etwa das Mähen von Gras in einem definierten Arbeitsbereich 3 ausführen. Hierzu zieht eine Steuer- und/oder Regelungseinrichtung 5 Daten zur Beschreibung einer Umgebung des Mähroboters 1, die von einer Sensoreinrichtung 4 gewonnen wurden und in einem digitalen Speicher 9 der Steuer- und/oder Regelungseinrichtung 5 abgespeichert sind, heran, um einen nicht gezeigten Fahrantrieb des Mähroboters 1 und die Bearbeitungseinrichtung 2 zu steuern.

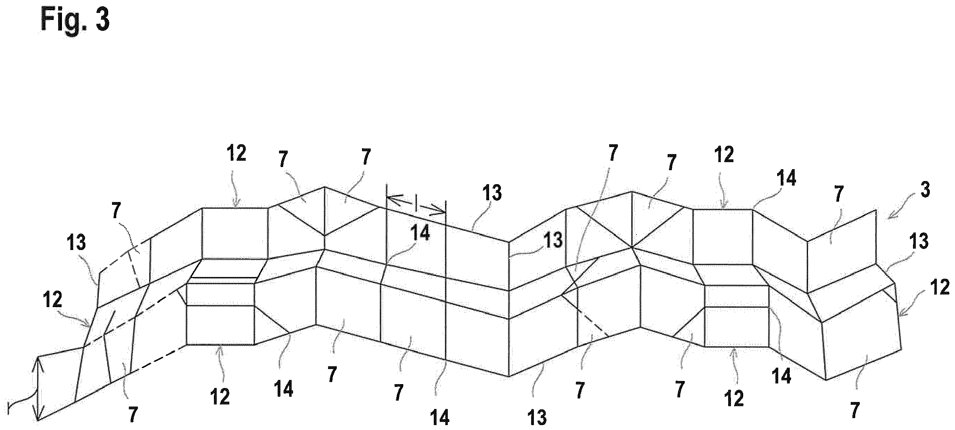

Der Mähroboter 1 bewegt sich hierbei über den Arbeitsbereich 3. Der Arbeitsbereich 3 ist von der Steuer- und/oder Regelungseinrichtung 5 und deren, in dem Speicher 9 abgespeicherten Daten in der Art einer räumlichen 3-D-Darstellung strukturiert. Wie Fig. 3 zeigt, ist die 3-D-Darstellung oder die räumliche Karte durch aneinandergefügte Polygone 7 gebildet. Die Polygone 7 sind nicht in einer einzigen Ebene angeordnet, sondern erstrecken sich jeweils in x-, y- und z-Richtung und bilden somit ein schematisches Gelände- oder Arbeitsbereichs-Relief aus. Die Polygone 7 sind in dem gezeigten Ausführungsbeispiel als Dreiecke oder Vierecke gebildet, können aber auch beliebige Vielecke mit beliebiger Kanten-Anzahl sein. Die Kantenlänge 1 der Polygone 7 kann gleich groß sein oder von Kante 13 zu Kante 13 bei einem Polygon 7 und auch über die Gesamtheit der Polygone 7 variieren. Jeweils eine Kante 13 eines jeden Polygons 7 verbindet hierbei zwei Referenzpunkte 14 (points of interest) miteinander.

Ist der Arbeitsbereich 3 an bestimmten Stellen in Bezug auf dessen Oberflächenbeschaffenheit, dessen Neigung oder weiterer örtlicher oder temporärer Charakteristika an den Referenzpunkten 14 stark variierend, so bietet es sich an, diese Stellen durch eine Vielzahl, in ihrer Flächenausdehnung sehr kleinen Polygonen 7 abzubilden. Umgekehrt ist es zweckmäßig, bei Stellen in dem Arbeitsbereich 3, an denen sich die Oberflächenbeschaffenheit und die genannten weiteren Charakteristika wenig ändern, durch größere Polygone 7 abzubilden.

Von der Steuer- und/oder Regelungseinrichtung 5 mit Sensoreinrichtung 4 werden die örtlichen Charakteristika in dem Arbeitsbereich 3, wie insbesondere Geländegrenzen 12, Geländeneigungen, Bodenwellen, bauliche Einrichtungen und Hindernisse oder die Art und Höhe von Bewuchs und auch die geomagnetische Ausrichtung an der betreffenden Stelle erfasst, der Arbeitsbereich 3 mit vorgegebenen Algorithmen in einer CPU einer zentralen Steuereinheit 10 strukturiert und in dem Speicher 9, der ein ROM oder RAM sein kann, abgelegt. Die genannten Daten können alternativ auch extern weiterbearbeitet werden.

Zusätzliche werden von der Steuer- und/oder Regelungseinrichtung 5 mit Sensoreinrichtung 4 temporäre und sich ändernde örtliche Charakteristika an den Referenzpunkten 14, wie die aktuelle Temperatur, die Oberflächenfeuchte oder die Belichtungsverhältnisse erfasst und abgespeichert. Dazu zählen auch dynamische Hindernisse oder allmählich entstehende Hindernisse.

Der Arbeitsbereich 3 kann somit kontinuierlich und bei Bedarf in Echtzeit strukturiert und die 3-D-Darstellung angepasst werden.

Wie Fig. 1 weiter zeigt, weist die Steuer- und/oder Regelungseinrichtung 5 ein Kommunikationsmodul 8 auf, mit Hilfe dessen eine Kommunikationsverbindung zwischen der Steuer- und/oder Regelungseinrichtung 5 und einem Nutzer des Mähroboters 1 vorzugsweise in der Art einer Mensch-Maschine-Schnittstelle hergestellt werden kann. Über das Kommunikationsmodul 8 können sowohl Arbeitsanweisungen für den Mähroboter 1 eingegeben werden, als auch eine 3-Darstellung oder -Karte des Arbeitsbereiches 3 oder eines Teilbereichs des Arbeitsbereiches 3, den der Mähroboter 1 bearbeiten soll, eingegeben werden.

Über das Kommunikationsmodul 8 können updates für das Steuerprogramm betreffend den Bearbeitungsablauf des Mähroboters 1 eingegeben werden. Ferner lassen sich Befehle an den Mähroboter 1 eingeben, die einen Versetz- oder Verlagerungsvorgang des Mähroboters 1 auslösen können. Es lässt sich auch eine Lernfahrt des Mähroboters 1 über den vorgesehenen Arbeitsbereich 3 iniziieren, wobei der Mähroboter 1 manuell, oder mit Hilfe eines Positionsmoduls 11 oder mit Hilfe einer Fernsteuerung bewegt werden kann.

Die Kommunikationsverbindung kann in der Art einer direkten, drahtlosen Verbindung (bluetooth) oder einer lokalen drahtlosen Netzwerk-Verbindung oder Internetverbindung ausgeführt sein.

Die Mensch-Maschine-Schnittstelle kann auch durch einen laptop, tablet-PC oder durch ein Smartphone realisiert werden.

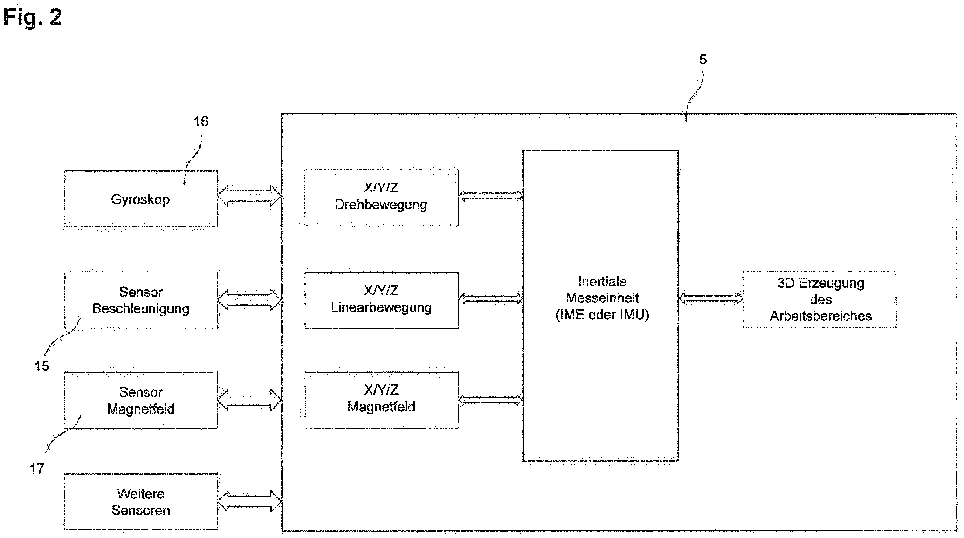

Die Sensoreinrichtung 4, die sowohl für die Erfassung der Umgebung des Mähroboters 1 zur Darstellung der 3-D-Darstellung des Arbeitsbereiches 3 als auch zur Positionsbestimmung des Mähroboters 1 genutzt werden kann, kann aus ein oder mehreren Kameras und/oder ein oder mehreren Infrarotkameras und/oder aus ein oder mehreren spektrometrischen Sensoren und/oder aus ein oder mehreren Radar-oder Lidar-Sensoren und/oder aus ein oder mehreren Beschleunigungs- oder Drehratensensoren 15, 16 und/oder aus ein oder mehreren Sensoren zum Empfang von Signalen eines Satelliten-gestützten Navigationssystems und/oder aus ein oder mehreren geomagnetischen oder gravimetrischen Sensoren 17 gebildet sein (vgl. Fig. 2).

### Bezugszeichenliste

- (1): Mähroboter
- (2): Bearbeitungseinrichtung
- (3): Arbeitsbereich
- (4): Sensoreinrichtung
- (5): Steuer-und/oder Regelungseinrichtung
- (7): Polygon
- (8): Kommunikationsmodul
- (9): Speicher, digital
- (10): Steuereinheit
- (11): Positionsmodul
- (12): Grenze, v. 3
- (13): Kante, v. 7
- (14): Referenzpunkt
- (15): Beschleunigungssensor
- (16): Drehratensensor
- (17): Sensor, geomagnetisch, gravimetrisch

- 1: Kantenlänge, v. 7

## Patentansprüche

1. Mähroboter (1) mit einer Bearbeitungseinrichtung (2) zur Durchführung von zumindest einem Arbeitsvorgang in einem Arbeitsbereich (3), mit einer Sensoreinrichtung (4) zur Erfassung einer Umgebung des Mähroboters (1), **dadurch gekennzeichnet, dass** eine Steuer- und/oder Regelungseinrichtung (5) zur Bestimmung zumindest der Position des Mähroboters (1) in dem Arbeitsbereich (3) und zur Steuerung der Bearbeitungseinrichtung (2) vorgesehen ist, wobei durch die Steuer- und/oder Regelungseinrichtung (5) mit der Sensoreinrichtung (4) der Arbeitsbereich (3) in der Art einer 3-D-Darstellung mit einer Mehrzahl an Polygonen (7) erfasst und aufgeteilt ist.

2. Mähroboter (1) nach Anspruch 1, **dadurch gekennzeichnet, dass** die Polygone (7) Drei-, Vier-, oder Vielecke sind, die verschiedene oder gleiche Kantenlänge (1) aufweisen können.

3. Mähroboter (1) nach Anspruch 1 oder 2, **dadurch gekennzeichnet, dass** zu jedem Polygon (7) von der Steuer- und/oder Regelungseinrichtung (5) örtliche Charakteristika des Arbeitsbereiches (3), wie Geländegrenzen, Geländeneigungen, Bodenwellen, bauliche Einrichtungen, Art und Höhe von Bewuchs oder die geomagnetische Ausrichtung zugeordnet sind.

4. Mähroboter (1) nach einem der Ansprüche 1 bis 3, **dadurch gekennzeichnet, dass** zu jedem Polygon (7) von der Steuer- und/oder Regelungseinrichtung (5) temporäre und sich ändernde örtliche Charakteristika des Arbeitsbereiches (3), wie die aktuelle Temperatur, die Oberflächenfeuchte oder die Belichtungsverhältnisse zugeordnet sind.

5. Mähroboter (1) nach einem der Ansprüche 1 bis 4, **dadurch gekennzeichnet, dass** durch die Steuer- und/oder Regelungseinrichtung (5) dynamische Hindernisse und/oder allmählich entstehende Hindernisse für den Mähroboter (1) erkannt sind.

6. Mähroboter (1) nach einem der Ansprüche 1 bis 5, **dadurch gekennzeichnet, dass** die Steuer- und/oder Regelungseinrichtung (5) mit einem Kommunikationsmodul (8) verbunden ist, mit Hilfe dessen eine Kommunikationsverbindung zwischen der Steuer- und/oder Regelungseinrichtung (5) und einem Nutzer des Mähroboters (1) in der Art einer Mensch-Maschine-Schnittstelle hergestellt ist.

7. Mähroboter (1) nach Anspruch 6, **dadurch gekennzeichnet, dass** die Kommunikationsverbindung in der Art einer direkten drahtlosen Verbindung oder einer lokalen drahtlosen Netzwerkverbindung oder einer Internetverbindung gebildet ist.

8. Mähroboter (1) nach einem der Ansprüche 1 bis 7, **dadurch gekennzeichnet, dass** die Sensoreinrichtung (4) eine Kamera oder ein Infrarotkamera, einen spektrometrischen Sensor oder Ultraschall-Distanzsensor, einen Radarsensor, ein Lidar oder einen Beschleunigungs- oder Drehratensensor (15, 16), einen Sensor zum Empfang von Signalen eines satellitengestützten Navigationssystems oder einen geomagnetischen oder gravimetrischen Sensor (17) umfasst.

9. Mähroboter (1) nach einem der Ansprüche 1 bis 8, **dadurch gekennzeichnet, dass** durch die Steuer- und/oder Regelungseinrichtung (5) mit Sensoreinrichtung (4) fortlaufend im Betrieb des Mähroboters (1) eine Positionsbestimmung in dem Arbeitsbereich (3) durchgeführt ist.

10. Mähroboter (1) nach einem der Ansprüche 1 bis 9, **dadurch gekennzeichnet, dass** die Steuer- und/oder Regelungseinrichtung (5) mit einem digitalen Speicher (9) verknüpft ist, in dem für einen Fahrantrieb des Mähroboters (1) und/oder für die Bearbeitungseinrichtung (2) Informationen betreffend den Arbeitsablauf, den Bewegungsablauf oder die Abmessungen des Mähroboters (1) und des Arbeitsbereiches (3) für die Verarbeitung in einer zentralen Steuereinheit (10) abgespeichert sind.

11. Mähroboter (1) nach Anspruch 10, **dadurch gekennzeichnet, dass** in dem Speicher (9) alle für die Durchführung eines jeweiligen Arbeitsvorganges relevanten örtlichen und temporär sich ändernden Charakteristika, sowie statische und dynamisch sich ändernde Hindernisse abgespeichert sind.

12. Mähroboter (1) nach Anspruch 10 oder 11, **dadurch gekennzeichnet, dass** die im Speicher (9) abgespeicherten Daten zumindest teilweise durch einen Einlernvorgang (teaching) des Mähroboters (1) erzeugt sind, wobei der Mähroboter (1) manuell oder mit Hilfe eines Positionsmoduls (11) oder mit Hilfe einer Fernsteuerung bewegt ist um Grenzen (12) des Arbeitsbereiches (3) zu erfassen oder die jeweiligen Charakteristika zu erfassen.

13. Verfahren zum Betrieb eines Mähroboters (1) mit einer Bearbeitungseinrichtung (2) zur Durchführung von zumindest einem Arbeitsvorgang in einem Arbeitsbereich (3), mit einer Sensoreinrichtung (4) zur Erfassung einer Umgebung des Mähroboters (1), **dadurch gekennzeichnet, dass** eine Steuer- und/oder Regelungseinrichtung (5) zur Bestimmung zumindest der Position des Mähroboters (1) in dem Arbeitsbereich (3) und zur Steuerung der Bearbeitungseinrichtung (2) vorgesehen ist, wobei durch die Steuer- und/oder Regelungseinrichtung (5) mit der Sensoreinrichtung (4) der Arbeitsbereich (3) in der Art einer 3-D-Darstellung mit einer Mehrzahl an Polygonen (7) erfasst und aufgeteilt wird.
